**Europäisches Patentamt**

**European Patent Office**

**Office européen des brevets**

(19)

(11) Veröffentlichungsnummer: **0 088 100**
**B1**

# (12) EUROPÄISCHE PATENTSCHRIFT

(45) Veröffentlichungstag der Patentschrift:
24.07.85

(21) Anmeldenummer: **82902702.8**

(22) Anmeldetag: **09.09.82**

(86) Internationale Anmeldenummer:
**PCT/AT 82/00026**

(87) Internationale Veröffentlichungsnummer:
**WO 83/01038 (31.03.83** Gazette 83/8)

(51) Int. Cl.⁴: **B 29 C 45/26**

(54) **BEFESTIGUNGSVORRICHTUNG FÜR DIE FORMWERKZEUGE EINER SPRITZGIESSMACHINE AN FORMTRÄGERN.**

(30) Priorität: **14.09.81 AT 3955/81**
**14.09.81 AT 3956/81**

(43) Veröffentlichungstag der Anmeldung:
**14.09.83 Patentblatt 83/37**

(45) Bekanntmachung des Hinweises auf die Patenterteilung:
**24.07.85 Patentblatt 85/30**

(84) Benannte Vertragsstaaten:
**BE DE FR GB NL SE**

(56) Entgegenhaltungen:
**EP - A - 0 025 995**
**CA - A - 1 015 639**
**DE - A - 2 253 451**
**DE - A - 2 724 020**
**DE - A - 2 947 938**

(73) Patentinhaber: **Ludwig Engel KG,**
**Ludwig-Engel-Strasse 1, A-4311 Schwertberg (AT)**

(72) Erfinder: **SCHWARZ, Georg, Friedhofstrasse 21,**
**A-4311 Schwertberg (AT)**

(74) Vertreter: **Torggler, Paul, Dr. et al, Patentanwälte Dr.**
**Paul Torggler DDr. Engelbert Hofinger**
**Wilhelm-Greil-Strasse 16, A-6020 Innsbruck (AT)**

ACTORUM AG

## Beschreibung

Die Erfindung bezieht sich auf eine Befestigungsvorrichtung für die Formwerkzeuge einer Spritzgiessmaschine an Formträgern, mit mindestens zwei, vorzugsweise vier zur Formtrennebene senkrechten Spannbolzen an der Rückseite eines jeden Formwerkzeuges, die in Löcher im Formträger ragen, und mit Arretiereinrichtungen für die Formwerkzeuge.

Im allgemeinen wurden bei der Befestigung von Formwerkzeugen an den Formträgern die Befestigungsmittel für den betreffenden Formteil im zwischen den Trägern liegenden Formraum angeordnet. Es kam dadurch leicht zu Beschädigungen durch die Form, und der Zugang zu den Formteilen zwischen den Zugankern war ebenfalls schwierig. Ein weiteres Problem ist dadurch aufgetreten, dass sie ohne übermässigen Aufwand kaum stabil genug ausgeführt werden konnten, um hohe Formöffnungskräfte aufzunehmen.

Es wurde in der DE-A Nr. 2724020 der Vorschlag gemacht, eine Befestigungsvorrichtung für die Formteile einer Spritzgiessmaschine auf den Formträgern zu schaffen, bei der an der Rückseite jedes Formteiles senkrecht zur Formtrennebene ausgerichtete Führungsbolzen vorgesehen sind, die durch Bohrungen im Formträger hindurchragen und an der Rückseite des Formträgers heraussehen. An der Rückseite des Formträgers sind Querschieber angeordnet, die in seitliche Ausnehmungen an den Führungsbolzen eingreifen und den Formteil mittels einer Keilfläche gegen den Formträger pressen.

In dieser Schrift wurde angestrebt, dass die Befestigungsmittel, d. h. die Querschieber, nicht mehr in dem zwischen den Trägern liegenden Formraum angeordnet und dadurch gegenüber Beschädigung geschützt sind. Diese Ausführungsform ist jedoch in der Praxis nicht verwendbar, da durch die notwendige Länge der Führungsbolzen, die länger sein müssen als die Breite der Formträger, übermässig grosse Formöffnungswege notwendig sind, um die Formwerkzeuge überhaupt austauschen zu können.

Die europäische Patentanmeldung EP-A3 Nr. 0025995 zeigt eine Aufspannvorrichtung für an Aufspannplatten von Spritzgiessmaschinen befestigbare Formwerkzeuge mit einem einzigen mittleren Zentrierflansch, der in eine Zentrierbohrung in der Aufspannplatte einsetzbar ist.

Ein Nachteil ergibt sich hierbei aus der Verwendung des Zentrierflansches als Befestigungsmittel. Dazu ist es notwendig, den Zentrierflansch und die korrespondierenden Bohrungen in den Formträgern äusserst exakt auszuführen, damit die Formwerkzeuge richtig zentriert wären — ein Problem das naturgemäss umso schwerer zu bewältigen ist, je mehr Führungsbolzen zur Befestigung eines Formwerkzeuges benötigt werden.

Aus diesem Grunde sind die beiden zuvor beschriebenen Systeme der Werkzeugbefestigung nicht miteinander kombinierbar.

Die DE-A Nr. 2253451 beschreibt einen durch ein Strömungsmedium betätigbaren Antriebsmechanismus, bei dem Kolben den Zylinder, in dem sie geführt sind, in erste und zweite Kammern unterteilen, wobei ein Ventil vorgesehen ist, das entweder eine Strömungsmittel-Durchlassstellung oder eine Strömungsmittel-Absperrstellung einnehmen kann, und dass mit den Zylinder- und Kolbenaggregaten ein Strömungsmittelkreis verbunden ist, mittels dem bestimmten Zylinderkammern Strömungsmittel unter Druck zugeführt werden können, wodurch einerseits eine schnelle axiale Bewegung der Zylinder-Kolbenaggregate mit geringer Betätigungskraft und andererseits eine langsame axiale Bewegug mit hoher Betätigungskraft erzielt werden kann. Die genannte Druckschrift gibt keinerlei Hinweis auf eine selektive Auswahl der Betätigunskraft beim Spannvorgang von Spritzgiesswerkzeugen.

Aufgabe der Erfindung ist es, eine Befestigungsvorrichtung der eingangs erwähnten Art zu schaffen, die einerseits den Vorteil mit sich bringt, dass der Formraum zwischen den Formträgern frei von den Befestigungsmittel für die Formwerkzeuge ist, und dass andererseits die Formöffnungswege klein, d. h. wie bei einer Befestigung mit Befestigungsteilen, an der Vorderfront der Formträger gehalten sein können, und bei der die Zentrierung der Werkzeuge unabhängig von den Befestigungselementen erfolgt. Weiters sollen für eine optimale Arretierung der Formwerkzeuge die das Formwerkzeug haltenden Schieber von der Hydraulik der Maschine während ihres Betriebes beaufschlagt sein.

Dies wird erfindungsgemäss erreicht durch an der Seite des Formträgers auslaufende Aussparungen, die in den Löchern für die Spannbolzen münden und in denen die Arretiereinrichtungen angeordnet sind, die innerhalb des Formträgers an den Spannbolzen angreifen, wobei ein Führungsbolzen für die Positionierung der Formwerkzeuge in der Schliessebene vorgesehen ist, und dadurch, dass die Arretiereinrichtungen keilförmige Schieber aufweisen und die Spannbolzen Löcher mit korrespondierenden Wandungen aufweisen, in denen die Schieber einrasten und die Schieber von seitlich an den Formträgern angeordneten hydraulischen Kolben-Zylindereinheiten beaufschlagt sind, die die Schieber während des Betriebes beaufschlagen und die eine höhere Löskraft als Spannkraft aufweisen.

Die äusserst kurzen Spannbolzen beeinflussen nicht die Führung bzw. Zentrierung der Formwerkzeuge. Die Zentrierung der Formwerkzeuge kann bei der erfindungsgemässen Befestigungsvorrichtung sowohl Formwerkzeug-Formwerkzeug, als auch Formwerkzeug-Formträger erfolgen. Bei der erstgenannten Zentrierung ragt beispielsweise ein Führungsbolzen von einem Formwerkzeug in eine Führungsbohrung des anderen Formwerkzeuges. Diese Zentrierung ist konstruktiv einfach und sehr genau, da kein Umweg über die Teile der Maschine gegangen wird. Bei der Zentrierung Formwerkzeug-Formträger kann an der Rückseite des Formwerkzeuges in dessen Mitte beispielsweise ein kegelstumpfartiger Zentriersockel ausgebildet sein, der in Montagelage in eine korrespondierende Öffnung bzw. Vertiefung im Formträger ragt.

In beiden Fällen erfolgt die eigentliche Befestigung des Formwerkzeuges am Formträger unabhängig von der Zentrierung der Formwerkzeuge.

Dadurch, dass die Kolben-Zylindereinheiten eine höhere Löskraft als Spannkraft aufweisen, wurde ein einwandfreies Lösen der Schieber sichergestellt.

Nachfolgend wird ein Ausführungsbeispiel der Erfindung anhand der Figuren der Zeichnungen beschrieben.

Die Fig. 1 zeigt schematisch eine Draufsicht auf eine Spritzgiessmaschine mit einer erfindungsgemässen Befestigungsvorrichtung,

die Fig. 2 zeigt einen Schnitt durch die Hälfte eines Formträgers und eines Formwerkzeuges mit erfindungsgemässer Befestigungsvorrichtung an einer Seite der Spritzgiessmaschine, und

die Fig. 3 und 4 zeigen schematisch zwei Ausführungsbeispiele der die Schieber der Befestigungsvorrichtung beaufschlagenden hydraulischen Kolben-Zylindereinheiten.

Im nachfolgenden wird jeweils nur ein Spannbolzen 6 und die dazugehörigen Teile eines Formwerkzeuges 3 und eines Formträgers 1 beschrieben, die anderen Spannbolzen 6 und die dazugehörigen Arretierungseinrichtungen am selben und am gegenüberliegenden Formwerkzeug 3 bzw. Formträger 1 sind selbstverständlich analog ausgebildet.

Auf die anderen Teile der Spritzgiessmaschine, wie beispielsweise Einspritzdüsen, Kunststoffzuführung und Schliessmechanismus, wird im Rahmen der nachfolgenden Beschreibung nicht eingegangen, da sie nicht Gegenstand der Erfindung bilden und entsprechend dem bekannten Stand der Technik ausgebildet sind.

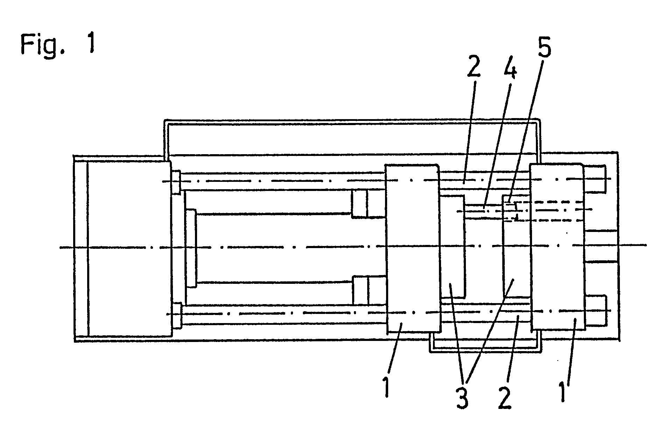

Bei der in Fig. 1 gezeigten Spritzgiessmaschine sind die Formträger 1 in herkömmlicher Weise auf Zugankern 2 angeordnet.

Beide Formträger 1 tragen Formwerkzeuge 3. Ein Formwerkzeug 3 ist mit einem Führungsbolzen 4 versehen, der in eine Führungsbohrung 5 im anderen Formwerkzeug 3 ragt. Führungsbolzen 4 und Führungsbohrung 5 übernehmen die Zentrierung der Formwerkzeuge 3 in der Schliessebene und sind daher mit grösster Genauigkeit ausgeführt.

Jedes Formwerkzeug 3 ist an seiner Rückseite mit vier Spannbolzen 6 versehen. Die Spannbolzen 6 ragen in korrespondierende Löcher 7, die im Ausführungsbeispiel als Sacklöcher ausgeführt sind, in den Formträgern 1.

Die Spannbolzen 6 weisen radiale durchgehende Löcher 8 auf, deren Wandung an der dem Formwerkzeug 3 abgewendeten Seite eine Schrägfläche 8' bildet.

In den Formträgern 1 sind seitlich der Löcher 7 und parallel zur Formtrennebene T keilförmige Schieber der Arretiereinrichtung 9 gelagert, die sich in Aussparungen 17 in den Formträgern 1 befinden. Die Aussparungen 17 sind an den Seiten der Formträger 1 offen. Diese keilförmigen Schieber werden von hydraulischen Kolben-Zylindereinheiten 10 beaufschlagt und rasten bei montierten Formwerkzeugen 3 in den Löchern 8 der Spannbolzen 6 ein.

Durch die Keilfläche 11 am Schieber und durch die korrespondierende Wandung 8' wird eine optimale Verspannung der Formwerkzeuge 3 an den Formträgern 1 erzielt. Der Winkel der Schrägfläche 8', sowie der Keilfläche 11 zur Verschiebeachse des Schiebers 9 beträgt im Ausführungsbeispiel 15°. Es handelt sich hiebei also um keine selbsthemmende Keilfläche.

Wie aus dem zuvor Beschriebenen leicht ersichtlich, sind die Formwerkzeuge 3 mittels der erfindungsgemässen Befestigungsvorrichtung einfach an den Formträgern 1 zu befestigen. Die der Befestigungsvorrichtung dienenden Teile sind ausserhalb des Formraumes, die Spannbolzen 6 können sehr kurz gehalten werden und die Zentrierung der Formwerkzeuge 3 kann unabhängig von der Befestigung durch herkömmliche, konstruktiv einfache Mittel erfolgen.

Es ist nun zu beachten, dass die Schieber 9 während des gesamten Betriebes der Spritzgiessmaschine in Schliessstellung, d. h. in den Löchern 8 der Spannbolzen 6 sind und von der Hydraulikseite her ständig unter Druck stehen, d. h. der Kolben 12 der Hydraulik-Zylindereinheit 10 ist ständig unter Druck und drückt somit auf den zugehörigen Schieber der Arretiereinrichtung 9.

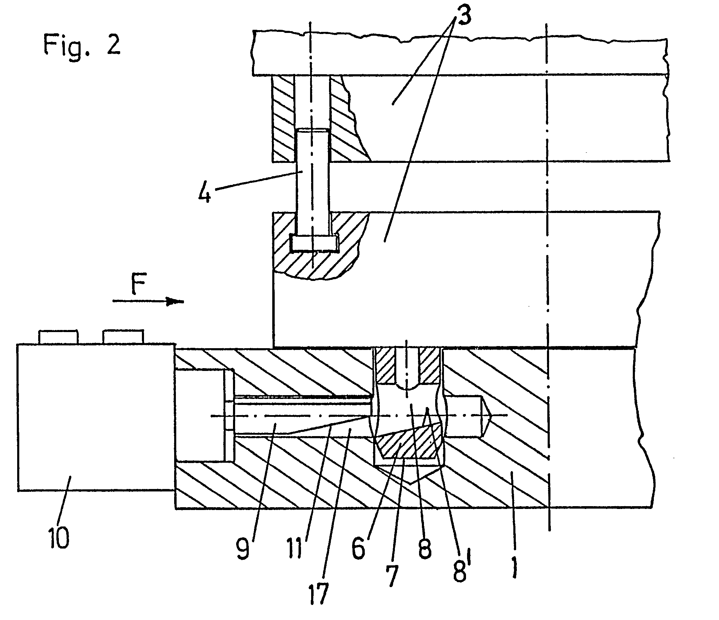

Durch die hohen Kräfte, die während des Spritzvorganges auftreten, kommt es jedoch zu einem Verformen des Formwerkzeuges 3 bzw. zu einem weiter Hineinpressen der Spannbolzen 6 in die Formträger 1. Dadurch, dass die Schieber der Arretiereinrichtung 9 vom Kolben 12 beaufschlagt werden, werden sie nun ständig weiter in Schliessrichtung, d. h. in Richtung des Pfeiles F der Fig. 2, in die Löcher 8 eingeschoben.

Die Folge davon ist, dass, wenn die Formwerkzeuge 3 gewechselt werden müssen, wesentlich höhere Kräfte zum Entriegeln der Schieber notwendig sind, als zum Verriegeln.

Diese Anforderung konnten die herkömmlichen Kolben-Zylindereinheiten nicht befriedigen.

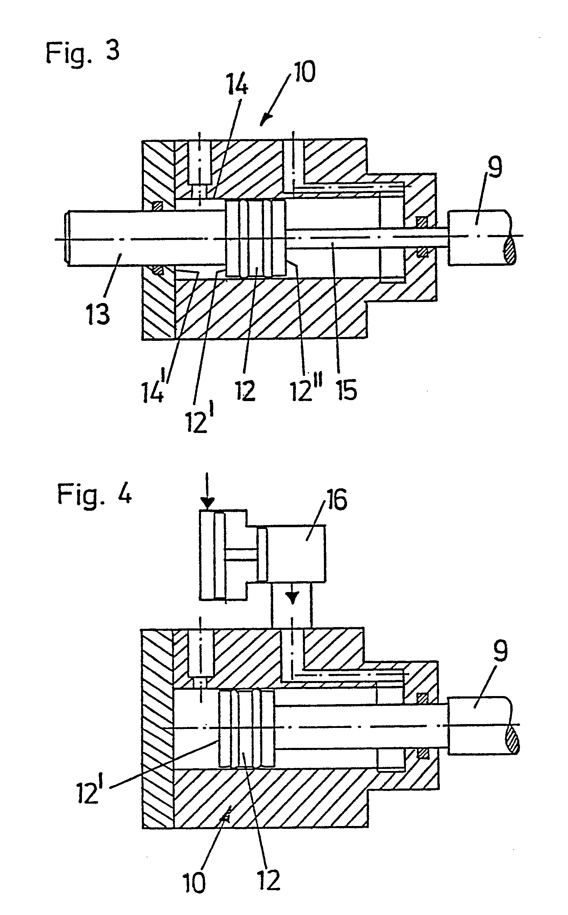

Es wurde daher Kolben-Zylindereinheiten 10, wie in den Fig. 3 und 4 schematisch gezeigt, bei der erfindungsgemässen Befestigungsvorrichtung eingesetzt bzw. für diese entwickelt.

Die Fig. 3 zeigt ein Ausführungsbeispiel, bei dem der Kolben 12 an seiner rückwärtigen Kolbenfläche 12' mit einem zylindrischen Verdrängungskörper 13 versehen ist, der dichtend durch die rückwärtige Stirnwand 14' des Zylinders 14 ragt.

Der Durchmesser dieses zylindrischen Verdrängungskörpers 13 ist grösser als der Durchmesser der Kolbenstange 15, die direkt zum Schieber 9 führt.

Die gesamte Kolben-Zylindereinheit 10 ist vorteilhaft etwas grösser ausgebildet, als eine herkömmliche Kolben-Zylindereinheit für die aufzubringenden Spannkräfte normalerweise wäre.

Durch den Verdrängungskörper 13 ergibt es sich, dass die wirkungsvolle Kolbenfläche 12' für die Spannkraft kleiner ist als die gegenüberliegende Kolbenfläche 12'' für die Löskraft. Die Kolben-

Zylindereinheit 10 gemäss der Fig. 3 entspricht daher der Forderung, dass die Kraft für das Entriegeln der Schieber der Arretiereinrichtung 9 grösser sein muss als die Kraft für das Verriegeln.

Ein anderer Weg wurde mit einer Kolben-Zylindereinheit 10 gemäss der Fig. 4 gegangen, bei der der Kolben 12 in herkömmlicher Weise ausgebildet ist.

An dem Zylinder 14 ist jedoch an der Entriegelungs- bzw. an der Öffnungsseite ein Druckverstärker 16 angeschlossen. Mittels des Druckverstärkers 16 kann an der Kolbenseite 12″ des Kolbens ein höherer Druck pro cm² aufgebaut werden, als an der Kolbenseite 12′. Auch diese Kolben-Zylindereinheit 10 entspricht somit den Anforderungen der erfindungsgemässen Befestigungsvorrichtung.

## Patentansprüche

1. Befestigungsvorrichtung für die Formwerkzeuge (3) einer Spritzgiessmaschine an Formträgern (1), mit mindestens zwei, vorzugsweise vier zur Formtrennebene senkrechten Spannbolzen (6) an der Rückseite eines jeden Formwerkzeuges (3), die in Löcher (7) im Formträger (1) ragen, und mit Arretiereinrichtungen (9) für die Formwerkzeuge, gekennzeichnet durch an der Seite des Formträgers (1) auslaufende Aussparungen (17), die in den Löchern (7) für die Spannbolzen (6) münden und in denen die Arretiereinrichtungen (9) angeordnet sind, die innerhalb des Formträgers (1) an den Spannbolzen (6) angreifen, wobei ein Führungsbolzen (4) für die Positionierung der Formwerkzeuge (3) in der Schliessebene vorgesehen ist, und dadurch, dass die Arretiereinrichtungen (9) keilförmige Schieber aufweisen und die Spannbolzen (6) Löcher (8) mit korrespondierenden Wandungen aufweisen, in denen die Schieber einrasten und die Schieber von seitlich an den Formträgern (1) angeordneten hydraulischen Kolben-Zylindereinheiten (10) beaufschlagt sind, die die Schieber während des Betriebes beaufschlagen und die eine höhere Löskraft als Spannkraft aufweisen.

2. Befestigungsvorrichtung nach Anspruch 1, dadurch gekennzeichnet, dass an der der Kolbenstange (15) gegenüberliegenden Seite ein Verdrängungskörper (13) am Kolben (12) der Kolben-Zylindereinheit (10) ausgebildet ist.

3. Befestigungsvorrichtung nach Anspruch 1, gekennzeichnet durch einen Öldruckverstärker (16) an der Entriegelungsseite der hydraulischen Kolben-Zylindereinheit (10).

4. Befestigungsvorrichtung nach Anspruch 1, dadurch gekennzeichnet, dass der Verdrängungskörper (13) ein Zylinder ist, der abdichtend in der anschliessenden Stirnwand (14) des Hydraulikzylinders (14) geführt ist.

## Claims

1. Clamping device for mounting the form tools (3) of an injection molding machine on form supports (1), comprising at least two, preferably four clamping bolts (6) on the rear side of each form tool (3), which are perpendicular to the form parting plane and protrude into holes (7) in the form support (1), and comprising locking means (9) for the form tools, characterized by recesses (17) extending at the side of the form support (1) which run into the holes (7) for the clamping bolts (6) and in which the locking means (9) engaging the clamping bolts (6) within the form support (1) are arranged; a guide bolt (4) for positioning the form tools (3) in the closing plane being provided, and characterized in that the locking means (9) have wedge-shaped slides, that the clamping bolts (6) have holes (8) with corresponding walls in which the slides engage and that the slides are acted upon by hydraulic piston-cylinder units (10) which are laterally arranged at the form supports (1), which act upon the slides during operation and have a stronger releasing force than clamping force.

2. Clamping device according to Claim 1, characterized in that at the side opposite the piston rod (15) a displacement body (13) is provided at the piston (12) of the piston-cylinder unit (10).

3. Clamping device according to Claim 1, characterized by oil pressure increasing means (16) at the unlocking side of the hydraulic piston-cylinder unit (10).

4. Clamping device according to Claim 1, characterized in that the displacement body (13) is a cylinder sealingly arranged in the face (14) of the hydraulic cylinder (14).

## Revendications

1. Dispositif de fixation des outils de formage (3) d'une machine à mouler par injection à des supports de forme (1), comportant à l'arrière de chacun des outils (3) au moins deux, de préférence quatre goujons de serrage (6) perpendiculaires au plan de joint du moule qui pénètrent dans les trous (7) du support de forme (1) et des agencements d'arrêt (9) des outils de formage, caractérisé par des évidements (17) se terminant au côté du support de forme (1), qui débouchent dans les trous (7) destinés aux goujons de serrage (6) et dans lesquels sont disposés les agencements d'arrêt (9) qui s'appliquent aux goujons de serrage (6) à l'intérieur du support de forme (1), un goujon de guidage (4) étant prévu pour le positionnement des outils de formage (3) dans le plan de fermeture, et par le fait que les agencements d'arrêt (9) présentent des coulisseaux en forme de coin et les goujons de serrage, des trous (8) à parois correspondantes dans lesquels les coulisseaux s'arrêtent et que les coulisseaux subissent l'action d'ensembles hydrauliques à piston et à cylindre (10) disposés latéralement sur les supports de forme (1), qui agissent sur les coulisseaux pendant le fonctionnement et qui présentent une force de desserrage plus grande que la force de serrage.

2. Dispositif de fixation selon la revendication 1, caractérisé par le fait que du côté opposé à la tige de piston (15), un corps de refoulement (13) est formé sur le piston (12) de l'ensemble à piston et à cylindre (10).

3. Dispositif de fixation selon la revendication 1, caractérisé par un multiplicateur de pression d'huile (16) sur le côté de déverrouillage de l'ensemble hydraulique à piston et à cylindre (10).

4. Dispositif de fixation selon la revendication 1, caractérisé en ce que le corps de refoulement (13) est un cylindre qui est guidé de façon étanche dans la paroi frontale adjacente (14) du cylindre hydraulique (14).

Fig. 1

Fig. 2

0 088 100

Fig. 3

14    10

9

13

14ᴵ    12ᴵ    12    12ᴵᴵ    15

Fig. 4

16

9

12ᴵ

10    12